# EUROPEAN PATENT APPLICATION

(11) **EP 1 968 236 A1**
(43) Date of publication of application: **10.09.2008**
(21) Application number: 06761511.2
(22) Date of filing: 20.07.2006
(51) Int. Cl.: H04L 12/26

(54) **METHOD FOR DETECTING AN AVAILABLE/UNAVAILABLE STATE OF PACKET TRANSMISSION NETWORK**

(30) Priority: 28.12.2005 CN 200510135507
(71) Applicant: Huawei Technologies Co., Ltd., Longgang District Shenzhen 518129 (CN)
(72) Inventor: WANG, Yan, Shenzhen, Guangdong 518129 (CN); ZHAI, Suping, Shenzhen, Guangdong 518129 (CN)
(74) Representative: Casalonga, Axel
(86) International application number: PCT/CN2006/001776
(87) International publication number: WO 2007/073644

(57) **Abstract**

A method for detecting an available/unavailable state of a packet transport network, includes the steps of: in the packet transport network, detecting a severely errored second (SES) using performance parameters of the packet transport network, and detecting an available/unavailable time with the SES as a reference, and thus providing a method of determining if the packet transport network enters and exits the available/unavailable state. In this way, the detection of the available time of the packet transport network is achieved, and it is ensured that performance parameters of the packet transport network are measured when the packet transport network is in an available state, while the measurement of the performance parameters of the packet transport network is stopped when the packet transport network is in an unavailable state. Thus, the OAM mechanism of the packet transport network can be improved, and the defects in the performance management of the packet transport network can be eliminated.

## Description

### FIELD OF THE INVENTION

The present invention relates to an operation, administration and maintenance technology of a packet transport network, and more particularly, to a method for detecting an available/unavailable state of a packet transport network.

### BACKGROUND

The Ethernet (ETH) technology has been developing from local area networks to metropolitan area networks due to an advantage of high performance price ratio since it occurs, with corresponding port rate increasing from 10M to 10G. The development of the ETH needs to meet requirements of telecom-level networks so as to satisfy practical network requirements, which provides a basis for further development of the Ethernet technology.

In a telecom-level network, the implementation of an operation, administration and maintenance (OAM) mechanism is a basic requirement for various network technologies utilized in the telecom-level network. In particular, the OAM mechanism includes a network fault management mechanism and a network performance management mechanism.

At present, in the ETH OAM, a fault/performance management mechanism, which has been defined, includes:
(1) Ethernet continuity check (ETH-CC) for checking connectivity between maintenance entity group end points (ETH MEP) of the Ethernet.
(2) Ethernet loop back (ETH-LB) for detecting the connectivity between a maintenance entity group end point (MEP) and a maintenance entity group intermediate point (MIP)/MEP, and measuring frame delay (FD) and frame delay variation (FDV) of performance parameters.
   Wherein, FD is a time period starting at a time when the first bit of a frame is transmitted by a source node and ending at a time when the last bit of the loop back frame is received by the source node, and the loop back is curried out by the destination node of the frame.
   FDV is a difference between FD values of a pair of service frames, which belong to the same service type, in a point-to-point Ethernet connection.
(3) Ethernet link trace (ETH-LT) for fault-locating.
(4) Ethernet alarm indication signal (ETH-AIS) and Ethernet remote defect indication (ETH-RDI) for fault alarm forward/ backward suppression.
(5) Ethernet loss measurement (ETH-LM) for measuring the frame loss ratio (FLR) in the performance parameters. The FLR is a percentage defined as the number of unsuccessfully transmitted service frames divided by the total number of service frames within a time period T, Here, the number of unsuccessfully transmitted service frames refers to the difference between the number of service frames transmitted to a UNI ingress and that received at a UNI egress.

In addition, there are also some performance parameters, such as error frame seconds, frame throughput, the number of frame transmitted (Frame Tx), the number of frame received (Frame Rx), the number of frame drop, and the like, which are not all listed herein.

The above performance parameters are meaningful only if the network is in an available state, and thus the definition of an available state is critical for performance measurements of the ETH. However, current standards fail to clearly define the available time/state of an ETH network.

At present, in the standard of G.7710 Common equipment management function requirements, an available time of a network is defined using the severely errored second (SES). In particular, the available time is defined as: an unavailable time is entered if x SESs occur consecutively, and the unavailable time includes these x seconds; while the available time is reentered if there are consecutive x seconds without the SES, and the available time includes these x seconds. This standard also provides the definition of a severely errored period (SEP). The SEP is defined as an errored second period during which consecutive SESs occur without causing the network to enter an unavailable time.

G.7710 defines a criterion of entering and exiting an unavailable time with the SES, however, it fails to give how to define the respective SESs in networks having different characteristics. While in G.826 and G.828 standards, with respect to characteristics of a synchronous digital hierarchy (SDH) transport network, the SES is defined based on bit error rate, and an available time is defined as x=10s. In G.826 and G.828, the SES for a SDH network is defined based on bit error rate and an unavailable time is defined with reference to the SES, which has characteristics of an optical network. For a packet transport network such as Ethernet, it is impossible to implement the detection of an available time of the Ethernet by using the SES defined in the SDH network based on bit error rate.

At present, there is no method for detecting an available state of a packet transport network, which causes a defect in performance management of a packet transport network.

### SUMMARY

In view of this, an object of the invention provides a method for detecting an available/unavailable state of a packet transport network, which is capable of detecting an available/unavailable time in the packet transport network.

To achieve the above object, the technical solution of the invention is implemented as follows.

A method for detecting an available/unavailable time of a packet transport network, comprising:
detecting a severely errored second using performance parameters of the packet transport network ;
detecting a time including consecutive x seconds as an available time, where x is preset, and the packet transport network entering an available state, if the x seconds are non-severely errored seconds; and
detecting a time including consecutive x seconds as an unavailable time, where x is preset, and the packet transport network entering an unavailable state, if the x seconds are severely errored seconds.

A consecutive and severely errored second counter is provided, and after the packet transport network enters an available state, the method further includes:
a1. initiating counting for the available time and corresponding performance parameters and stopping counting for the unavailable time;
b1. resetting the consecutive and severely errored second counter;
c1. detecting if a current second is a severely errored second, if the current second is a severely errored second, increasing the consecutive and severely errored second counter by one and proceeding to step d1; otherwise, returning to step b1;
d1. determining if the count of the consecutive and severely errored second counter equals a preset threshold x, if the count of the consecutive and severely errored second counter equals the threshold x, the packet transport network enters the unavailable state; otherwise, returning to step c1.

A consecutive and non-severely errored second counter is provided, and after the packet transport network enters an unavailable state, the method further comprises:
a2. stopping counting for the available time and corresponding performance parameters and initiating counting for the unavailable time;
b2. resetting the consecutive and non-severely errored second counter;
c2. detecting if a current second is a severely errored second, if the current second is a severely errored second, returning to step b2; otherwise, increasing the consecutive and non-severely errored second counter by one and proceeding to step d2;
d2, determining if the count of the consecutive and non-severely errored second counter equals a preset threshold x, if the count of the consecutive and non-severely errored second counter equals the threshold x, returning to step c2; otherwise, the packet transport network enters the available state.

The method for detecting the severely errored second includes:
selecting performance parameters of the packet transport network used by the detection, and setting thresholds for the performance parameters of the packet transport network;
detecting the performance parameters of the packet transport network within one second, and determining whether each of the performance parameters of the packet transport network used by the detection exceeds its corresponding threshold, if each of the performance parameters of the packet transport network used by the detection exceeds its corresponding threshold, determining that the current second is a severely errored second, and otherwise, determining that the current second is a non-severely errored second.

The performance parameters of the packet transport network are detected at least once within one second.

The performance parameters of the packet transport network include frame loss ratio, and/or frame delay and/or frame delay variation.

The preset x seconds is ten seconds.

The method further includes:
measuring the performance parameters of the packet transport network when the packet transport network is in an available state;
stopping the measurement of the performance parameters of the packet transport network when the packet transport network is in an unavailable state,

It can be seen from the above technical solution of the invention that, in a packet transport network such as Ethernet, an SES is detected using performance parameters of the Ethernet such as FLR, FD and FDV, and an available/unavailable state of the packet transport network is detected with the SES as a reference, thereby providing a method for determining if a packet transport network enters and exits the available/unavailable state. In this way, the detection of the available state of the packet transport network can be achieved, and it can be ensured that performance parameters of the packet transport network are measured when the packet transport network is in an available state, while the measurement of the performance parameters of the packet transport network is stopped when the packet transport network is in an unavailable state. Thus, the packet transport network OAM mechanism can be improved, and defects in performance management of the packet transport network can be eliminated.

### BRIEF DESCRIPTION OF THE DRAWING(S)

Fig. 1 is a flow chart of detecting an SES according to the present invention;

Fig. 2 is an exemplary schematic diagram of detecting an available/unavailable time according to the present invention; and

Fig. 3 is a flow chart of detecting an available/unavailable state according to the present invention.

### DETAILED DESCRIPTION

The gist of the invention is that: a severely errored second is detected using performance parameters of a packet transport network; a time including consecutive x seconds is detected as an available time, where x is preset, and the packet transport network enters an available state, if the x seconds are non-severely errored seconds; and a time including consecutive x seconds is detected as an unavailable time, where x is preset, and the packet transport network enters an unavailable state, if the x seconds are severely errored seconds.

In order to make objects, technical solutions and advantages of the invention more apparent, a further detailed description of the invention is given below with respect to preferred embodiments and with reference to the accompany drawings.

While the invention is described taking Ethernet as an example, the disclosed method below may also be applied to other packet transport networks similar to Ethernet.

Since measurements of Ethernet performance parameters are meaningful only if the Ethernet is in an available state, the measurements of the Ethernet performance parameters should be stopped when the Ethernet is in an unavailable state. The embodiments of the invention are implemented by providing a method of determining if the Ethernet enters or exits an available/unavailable state with the determination of an SES and the detection of an available/unavailable time. In this way, the detection of the available state of the packet transport network can be achieved, and it can be ensured that performance parameters of the packet transport network are measured when the packet transport network is in an available state, while the measurement of the performance parameters of the packet transport network is stopped when the packet transport network is in an unavailable state.

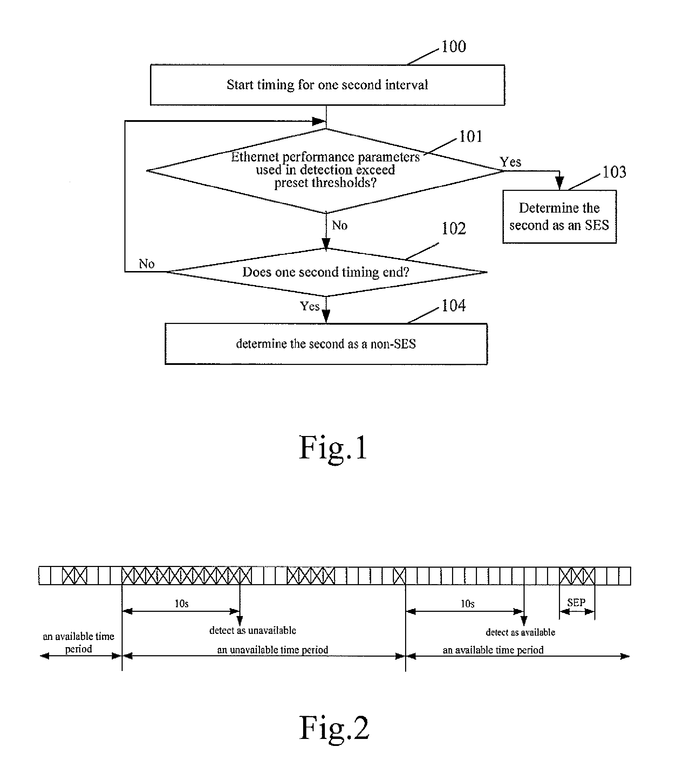

First, whether a current second is an SES is detected. That is, the Ethernet performance parameters such as FLR, FD, FDV that are used by detecting the SES are firstly selected, wherein the Ethernet performance parameters may be one, two or more parameters. Within one second, if each of the Ethernet performance parameters for detecting the SES exceeds a preset threshold, it is determined that the current second is an SES. In other words, if one of the Ethernet performance parameters such as FLR is selected to make the detection, the second is determined as an SES as long as the FLR exceeds a preset threshold. If two of the Ethernet performance parameters such as FLR and FDV are selected to make the detection, the second is determined as an SES only if both FLR and FDV exceed preset thresholds. Fig. 1 is a flow chart for detecting an SES according to an embodiment of the invention, which specifically includes the following steps.

Step 100: starting timing for an interval of one second.

This step may be implemented by triggering a timer that has a timing period of one second.

Step 101: determining if each of Ethernet performance parameters used by the detection exceeds a preset threshold; if each of the Ethernet performance parameters used by the detection exceeds the threshold, proceeding to step 103, and otherwise, proceeding to step 102.

It is noted that, depending on requirements and practical situation, one or combination of any two of these three Ethernet performance parameters FLR, FD and FDV may be selected to determine if a current second is an SES, alternatively, more Ethernet performance parameters may be selected to determine if a current second is an SES.

The measuring frequency of Ethernet performance parameters is related to the measuring mechanism and its configuration. For example, it is required for an Ethernet performance parameter for detecting an SES to be measured at least once within one second, so as to determine if the current second is an SES. In case that an Ethernet performance parameter is measured multiple times within one second, the second is considered as an SES, as long as one of the measurements exceeds the preset threshold.

For the measurement and computation method of the above Ethernet performance parameters selected for detecting an SES, complete implementation mechanisms are disclosed in relevant drafts, for example, those may be implemented by existing fault/performance management mechanisms such as ETH-LM, ETH-DM, the detailed description of which is omitted herein.

In addition, during the detection of an SES, the determination of the threshold for determining if a current second is an SES is also involved, and different determining methods may be selected for different Ethernet performance parameters. Only FLR, FD and FDV are taken as examples herein for explanation below.

For FLR, corresponding reference thresholds may be given, such as 15% or 20%. For FD, depending on the whole consideration of factors such as network bandwidth, transport distance and required class of service, and practical situation, a threshold may be appropriately set, such as 50ms, 100ms and so on. For FDV, a reference threshold of the ratio FDV/ FD1= ( FD2-FD1 ) /FD1 such as 20% or 50% may be given, or a threshold of FDV such as 20ms, 50ms may be directly set.

Step 102: determining if the timer for timing one second expires. If the timer expires, proceeding to step 104, and if the timer does not expire, returning to step 101.

Step 103: determining the second is an SES and ending this procedure.

Step 104: determining the second is a non-SES.

When the timer for timing one second expires, the timer is reset, and the flow shown in Fig. 1 is repeated for detecting if a next second is an SES.

With the detection of the SES, it is possible to detect an available/unavailable time of the Ethernet, which in particular includes an unavailable time period, an available time period and a severely errored period. Fig. 2 is an exemplarily schematic diagram of detecting an available/unavailable time according to an embodiment of the invention. As shown in Fig. 2, one square represents one second, a blank square indicates that this second is a non-SES, a crossed square indicates that this second is an SES, and the time from left to right increases. The method for detecting an available/unavailable time of the Ethernet is illustrated particularly as follows.

If consecutive x seconds are SESs, where x is preset, an unavailable time is detected. The unavailable time period starts from the beginning of the x consecutive SESs, that is, the x seconds are part of the unavailable time. In Fig. 2, x=10s is taken as an example,

If consecutive x seconds are non-SESs, where x is preset, the available time is detected. The available time period starts from the beginning of the x consecutive non-SESs, that is, the x seconds are part of the available time.

In case that SESs occur while an unavailable time is not incurred, if consecutive two or more than two seconds, which are less than x seconds, are SESs, the consecutive SESs are detected as SEP. It can be easily seen that the SEP only exists in an available state. Here, the word "more than"/"less than" means excluding the current value itself.

In general, measurements of network performance parameters in a network are unidirectional, and particularly in Ethernet, end points of the Ethernet measure the network performance parameters for forward and backward paths, respectively. The above method may be applied to detecting availability/unavailability of the forward and backward paths. Furthermore, since Ethernet services are bi-directional, an Ethernet service is considered as unavailable if one direction is in an unavailable state.

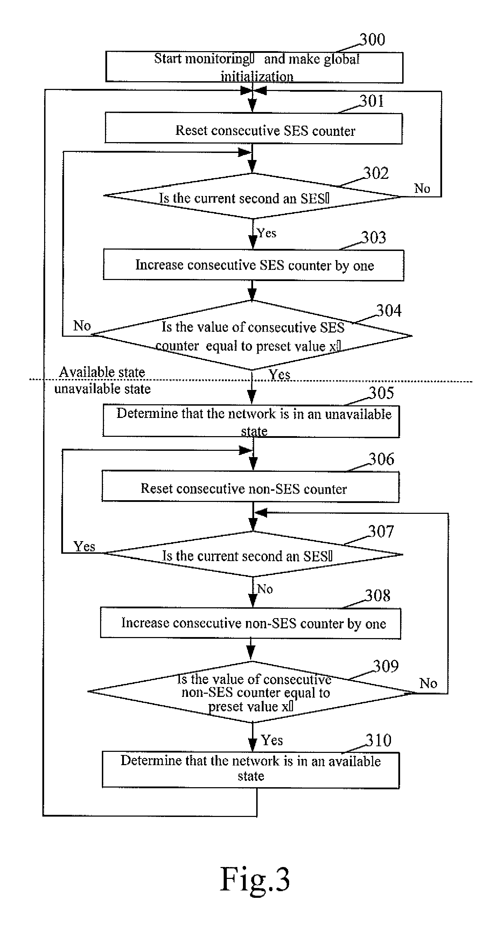

It is possible to determine whether the Ethernet is in an available state or an unavailable state, by combining the above detection of an SES and an available/unavailable time. Fig. 3 is a flow chart of detecting an available/unavailable state according to an embodiment of the invention, which specifically includes the following steps.

Step 300: making a global initialization.

Related counters such as a consecutive SES counter or a consecutive non-SES counter are provided.

Step 301: resetting the consecutive SES counter.

The consecutive SES counter is operable to count the consecutive SESs.

Step 302: determining whether a current second is an SES, if the current second is an SES, proceeding to step 303, otherwise, returning to step 301.

The method for determining if the current second is an SES is shown in Fig. 1, and the detailed description thereof is omitted herein.

Step 303: increasing the consecutive SES counter by one.

Step 304: determining if the count of the consecutive SES counter exceeds a preset threshold x, if the count of the consecutive SES counter exceeds the threshold x, proceeding to step 305, otherwise, returning to step 302 for detecting the next second.

Step 305: determining the Ethernet is in an unavailable state.

If it is determined that the count of the consecutive SES counter exceeds the threshold x in step 304, it is detected that the Ethernet enters an unavailable state.

When the Ethernet enters an unavailable state from an available state, the counting for an available time and corresponding performance parameters are stopped, and the counting for an unavailable time are initiated. It is noted that the statistic for an unavailable time needs to trace back x seconds, that is, the unavailable time includes the x seconds.

Step 306: resetting the consecutive non-SES counter.

The consecutive non-SES counter is operable to count the consecutive non-SESs.

Step 307: determining whether the current second is an SES, if the current second is an SES, returning to step 306, otherwise, proceeding to step 308.

The method for determining if the current second is an SES is shown in Fig. 1, and the detailed description thereof is omitted herein.

Step 308: increasing the consecutive non-SES counter by one.

Step 309: determining if the count of the consecutive non-SES counter exceeds the threshold x, if the count of the consecutive non-SES counter exceeds the threshold x, returning to step 310, otherwise, returning to step 307 for detecting the next second.

In this step, if it is determined that the count of the consecutive non-SES counter equals the threshold x, then the Ethernet makes transition from an unavailable state to an available state. At this time, the counting for an unavailable time is stopped, and the counting for an available time and corresponding performance parameters are initiated. Likewise, the counting for the available time needs to trace back x seconds.

Step 310: determining the Ethernet is in an available state and returning to step 301.

In summary, in the invention, in an Ethernet, an SES is detected using Ethernet performance parameters such as FLR, FD and FDV, an available/unavailable time in the Ethernet is detected by using the SES as a reference, and thus a method of determining if the Ethernet enters or exits an available/unavailable state is provided. In this way, the detection of an available time of the Ethernet can be achieved. It can be ensured that Ethernet performance parameters are measured when the Ethernet is in an available state, while the measurement of the Ethernet performance parameters is stopped when the Ethernet is in an unavailable state. Thus, the ETH OAM mechanism is improved, and defects in performance management of the ETH network are overcome.

The above is only preferred embodiments of the invention, and is not intended to limit the scope of the invention. Any modification, equivalent substitution and improvement within the spirit and scope of the invention are intended to be included in the scope of the invention.

## Claims

1. A method for detecting an available/unavailable state of a packet transport network, the method comprising:
detecting a severely errored second using performance parameters of the packet transport network;
detecting a time including consecutive x seconds as an available time, where x is preset, and the packet transport network entering an available state, if the x seconds are non-severely errored seconds; and
detecting a time including consecutive x seconds as an unavailable time, where x is preset, and the packet transport network entering an unavailable state, if the x seconds are severely errored seconds.

2. The method of claim 1, wherein a consecutive and severely errored second counter is provided, and after the packet transport network enters the available state, the method further comprising:
a1. initiating counting for the available time and corresponding performance parameters and stopping counting for the unavailable time;
b1. resetting the consecutive and severely errored second counter;
c1. detecting if a current second is a severely errored second, if the current second is a severely errored second, increasing the consecutive and severely errored second counter by one and proceeding to step d1; otherwise, returning to step b1;
d1. determining if the count of the consecutive and severely errored second counter equals a preset threshold x, if the count of the consecutive and severely errored second counter equals the threshold x, the packet transport network enters the unavailable state; otherwise returning to step c1.

3. The method of claim 1, wherein a consecutive and non-severely errored second counter is provided, and after the packet transport network enters the unavailable state, the method further comprising:
a2. stopping counting for the available time and corresponding performance parameters and initiating counting for the unavailable time;
b2. resetting the consecutive and non-severely errored second counter;
c2. detecting if a current second is a severely errored second, if the current second is a severely errored second, returning to step b2; otherwise, increasing the consecutive and non-severely errored second counter by one and proceeding to step d2;
d2. determining if the count of the consecutive and non-severely errored second counter equals a preset threshold x, if the count of the consecutive and non-severely errored second counter equals the threshold x, returning to step c2; otherwise, the packet transport network enters the available state.

4. The method of claim 1, 2 or 3, wherein the step of detecting the severely errored second is:
selecting performance parameters of the packet transport network used by detection, and setting thresholds for the performance parameters of the packet transport network;
detecting the performance parameters of the packet transport network within one second, and determining whether each of the performance parameters of the packet transport network used by the detection exceeds its corresponding threshold, if each of the performance parameters of the packet transport network used by the detection exceeds its corresponding threshold, determining that the current second is a severely errored second, and otherwise, determining that the current second is a non-severely errored second.

5. The method of claim 4, wherein the performance parameters of the packet transport network are detected at least once within one second.

6. The method of any one of claims 1 to 5, wherein the packet transport network is an Ethernet.

7. The method of claim 1, wherein the packet transport network is an Ethernet, and the performance parameters of the packet transport network include one or more of the following parameters:
frame loss ratio, frame delay and frame delay variation.

8. The method of claim 1, wherein the preset x seconds is ten seconds.

9. The method of claim 1, the method further comprising:
measuring the performance parameters of the packet transport network while the packet transport network is in the available state; and
stopping the measurement of the performance parameters of the packet transport network while the packet transport network is in the unavailable state.
